# EUROPEAN PATENT APPLICATION

(11) **EP 4 286 449 A1**
(43) Date of publication of application: **06.12.2023**
(21) Application number: 22746101.9
(22) Date of filing: 07.01.2022
(51) Int. Cl.: C08G 64/04, C08G 64/30, C08L 69/00

(54) **POLYCARBONATE AND METHOD FOR PREPARING SAME**

(30) Priority: 27.01.2021 KR 20210011646
(71) Applicant: Lg Chem, Ltd., Seoul 07336 (KR)
(72) Inventor: JANG, Hanbit, Daejeon 34122 (KR); IM, Seoyoung, Daejeon 34122 (KR); LEE, Hoyong, Daejeon 34122 (KR); SONG, Cheol Jun, Daejeon 34122 (KR)
(74) Representative: Goddar, Heinz J.
(86) International application number: PCT/KR2022/000316
(87) International publication number: WO 2022/164072

(57) **Abstract**

The present application relates to a polycarbonate including a unit represented by Chemical Formula 1, a composition including the same and a molded article prepared from the composition.

## Description

The present application is a National Phase entry pursuant to International Application No. PCT/KR2022/000316 filed on January 12, 2022, and claims priority to and the benefit of Korean Patent No. 10-2021-0011646 filed in the Korean Intellectual Property Office on January 27, 2021, the entire contents of which are incorporated herein by reference.

### FIELD

The present invention relates to a polycarbonate and a preparation method thereof. More specifically, the present invention relates to a polycarbonate having high hardness and/or heat resistance, and a preparation method thereof.

### BACKGROUND

A polycarbonate resin is a polymer material, which has been used in various fields such as exterior materials of electrical and electronic products, automobile parts, construction materials, and optical parts.

Polycarbonate is a material extracted from bisphenol A petroleum and has a problem in that in order to increase the hardness, additional processes such as hard coating and costs are required, and the durability is reduced.

Therefore, there is a need for the development of a polycarbonate with improved durability while maintaining excellent physical properties of the polycarbonate itself.

### SUMMARY

An exemplary embodiment of the present invention has been made in an effort to provide a polycarbonate having a novel structure, and a preparation method thereof.

Another exemplary embodiment of the present invention has been made in an effort to provide a composition including a polycarbonate having a novel structure, and a molded article prepared from the composition.

An exemplary embodiment of the present invention provides a polycarbonate including a unit represented by the following Chemical Formula 1.

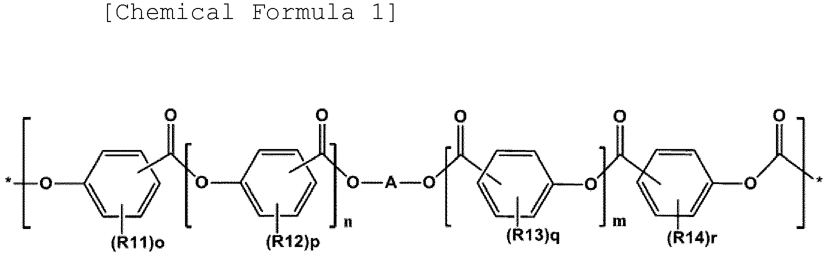

In Chemical Formula 1,
A is one selected from a substituted or unsubstituted straight-chained or branched alkylene, a substituted or unsubstituted cycloalkylene, and a substituted or unsubstituted arylene or a group in which two or more thereof are linked,
R11 to R14 are the same as or different from each other, and are each a halogen, an alkyl or an alkoxy,
o, p, q and r are each an integer from 1 to 4,
n and m are each an integer from 0 to 50,
when o is 2 or higher, R11's are the same as or different from each other,
when p or n is 2 or higher, R12's are the same as or different from each other,
when q or m is 2 or higher, R13's are the same as or different from each other,
when r is 2 or higher, R14's are the same as or different from each other,
units of Chemical Formula 1 included in the polycarbonate are the same as or different from each other, and
* means a site linked to the main chain of the polycarbonate.

Another exemplary embodiment of the present invention provides a method for preparing a polycarbonate including the unit represented by Chemical Formula 1, the method including: polymerizing a composition including a compound of the following Chemical Formula 11 and a carbonate precursor.

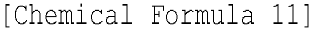

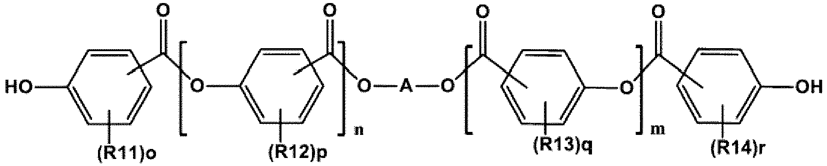

In Chemical Formula 11, the definition of the substituents A, R11 to R14, n, m, o and p are the same as that in Chemical Formula 1.

Still another exemplary embodiment of the present invention provides a composition including the polycarbonate according to the above-described exemplary embodiment.

Yet another exemplary embodiment of the present invention provides a molded article prepared from a composition including the polycarbonate according to the above-described exemplary embodiment.

The polycarbonate according to some exemplary embodiments of the present invention has a high hardness.

The polycarbonate according to some exemplary embodiments of the present invention has excellent heat resistance.

Therefore, by using a polycarbonate having high hardness or excellent heat resistance, the polycarbonate can be utilized in a wide range of fields such as lenses, glass, optical parts and vehicle parts that require excellent mechanical strength or heat resistance.

### DETAILED DESCRIPTION

Hereinafter, specific exemplary embodiments will be described in more detail.

In the present specification, a cycloalkylene may be a monocyclic or polycyclic cycloalkylene. Specifically, the cycloalkylene may be a cycloalkylene having 3 to 20 carbon atoms; a monocyclic or polycyclic cycloalkylene having 6 to 18 carbon atoms; or a monocyclic or polycyclic cycloalkylene having 6 to 12 carbon atoms. More specifically, the cycloalkylene may be a divalent group derived from an alicyclic hydrocarbon such as cyclopentylene, cyclohexylene, or cycloheptylene as the monocyclic cycloalkylene, and may be adamantane-diyl, norbonane-diyl, and the like as the polycyclic cycloalkylene. However, the cycloalkylene is not limited thereto. Further, the cycloalkylene may be unsubstituted or substituted one or more with an alkyl group having 1 to 10 carbon atoms, an alkoxy having 1 to 10 carbon atoms, or a halogen.

In the present specification, the description on the cycloalkylene may be applied, except that cycloalkyl is a monovalent group rather than a divalent group.

In the present specification, a heterocycloalkylene may be a monocyclic or polycyclic heterocycloalkylene group including O, S, Se or N as a heteroatom. Specifically, the heterocycloalkylene may be a heterocycloalkylene having 1 to 20 carbon atoms; a monocyclic or polycyclic heterocycloalkylene having 2 to 18 carbon atoms; or a monocyclic or polycyclic heterocycloalkylene having 2 to 12 carbon atoms. More specifically, examples of the heterocycloalkylene include dioxanylene, dithianylene, and the like.

In the present specification, the description on the heterocycloalkylene may be applied, except that heterocycloalkyl is a monovalent group rather than a divalent group.

In the present specification, a straight-chained or branched alkylene may be a straight-chained or branched alkylene as a divalent group derived from an aliphatic hydrocarbon having 1 to 10, or 1 to 5 carbon atoms. In the case of a branched alkylene, the number of carbon atoms thereof may be 2 to 10, or 2 to 5. Specific examples of the alkylene include methylene, ethylene, propylene, n-propylene, isopropylene, butylene, n-butylene, isobutylene, tert-butylene, sec-butylene, 1-methyl-butylene, 1-ethyl-butylene, pentylene, n-pentylene, isopentylene, neopentylene, tert-pentylene, hexylene, n-hexylene, 1-methylpentylene, 2-methylpentylene, 4-methyl-2-pentylene, 3,3-dimethylbutylene, 2-ethylbutylene, heptylene, n-heptylene, 1-methylhexylene, octylene, n-octylene, tert-octylene, 1-methylheptylene, 2-ethylhexylene, 2-propylpentylene, n-nonylene, 2,2-dimethylheptylene, 1-ethyl-propylene, 1,1-dimethylpropylene, isohexylene, 2-methylpentylene, 4-methylhexylene, 5-methylhexylene, and the like, but are not limited thereto.

In the present specification, the description on the straight-chained or branched alkylene may be applied, except that a straight-chained or branched alkyl is a monovalent group rather than a divalent group.

In the present specification, the alkyl includes a straight-chained alkyl and a branched alkyl, unless otherwise limited.

In the present specification, an arylene may be a monocyclic or polycyclic arylene, and the number of carbon atoms thereof is not particularly limited, but is preferably 6 to 30, and may be 6 to 20. Specific examples of the monocyclic arylene include phenylene, biphenylylene, terphenylylene, and the like, but are not limited thereto. When the arylene is a polycyclic arylene, the number of carbon atoms thereof is not particularly limited, but is preferably 10 to 30, and may be 10 to 20. Specific examples of the polycyclic arylene include naphthylene, anthracenylene, phenanthrenylene, triphenylenylene, pyrenylene, phenalenylene, perylenylene, chrysenylene, fluorenylene, and the like, but are not limited thereto.

In the present specification, the description on the arylene may be applied, except that aryl is a monovalent group rather than a divalent group.

In the present specification, a heteroarylene includes one or more atoms other than carbon, that is, one or more heteroatoms, and specifically, the heteroatom includes one or more atoms selected from the group consisting of O, N, Se, S, and the like. The number of carbon atoms of the heteroarylene is not particularly limited, but is preferably 1 to 30, and may be 1 to 20. The heteroarylene may be monocyclic or polycyclic. Examples of the heteroarylene include a thiophene group, a furan group, a pyrrole group, an imidazole group, a thiazole group, an oxazole group, an oxadiazole group, a pyridine group, a bipyridine group, a pyrimidine group, a triazine group, a triazole group, an acridine group, a pyridazine group, a pyrazine group, a quinoline group, a quinazoline group, a quinoxaline group, a phthalazine group, a pyridopyrimidine group, a pyridopyrazine group, a pyrazinopyrazine group, an isoquinoline group, an indole group, a carbazole group, and the like, but are not limited thereto.

In the present specification, the description on the heteroarylene may be applied, except that heteroaryl is a monovalent group rather than a divalent group.

In the present specification, a divalent aliphatic hydrocarbon group means the above-described straight-chained or branched alkylene, cycloalkylene, heterocycloalkylene, and the like.

In the present specification, an alkoxy may be an alkoxy having 1 to 10, or 1 to 5 carbon atoms. Specific examples of the alkoxy include methoxy, ethoxy, n-propoxy, isopropoxy, n-butoxy, isobutoxy, tert-butoxy, sec-butoxy, 1-methyl-butoxy, 1-ethyl-butoxy, pentoxy, or the like, but are not limited thereto.

In the present specification, a halogen is a fluoro, chloro, bromo, or iodo group.

The term "substitution" means that a hydrogen atom bonded to a carbon atom of a compound is changed into another substituent, and a position to be substituted is not limited as long as the position is a position at which the hydrogen atom is substituted, that is, a position at which the substituent may be substituted, and when two or more are substituted, the two or more substituents may be the same as or different from each other.

In the present specification, the term "substituted or unsubstituted" means being substituted with one or more substituents selected from the group consisting of a halogen; alkyl; cycloalkyl; heterocycloalkyl; alkoxy; aryl; and heteroaryl, being substituted with a substituent to which two or more substituents among the exemplified substituents are linked, or having no substituent.

In the present specification, * means a binding site to another structure.

An exemplary embodiment of the present invention provides a polycarbonate including a unit represented by the following Chemical Formula 1.

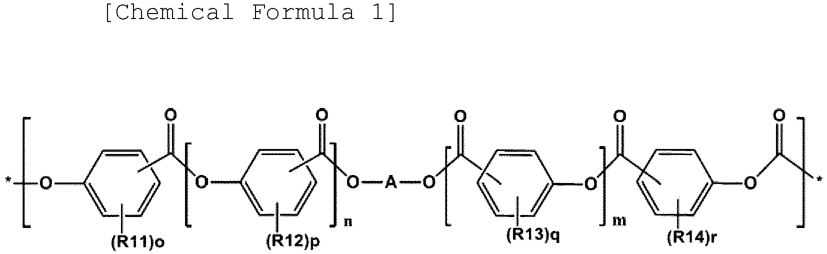

In Chemical Formula 1, the definition of the substituents A, R11 to R14, n, m, o and p are the same as that described above.

The structure of Chemical Formula 1 may include an ester structure and a phenyl group may be substituted with a halogen group, an alkyl group or an alkoxy group, thereby having higher hardness and heat resistance than a polycarbonate in which a phenyl group is not substituted.

According to an exemplary embodiment of the present invention, when the polycarbonate includes two or more units of Chemical Formula 1, a plurality of units of Chemical Formula 1 is the same as or different from each other.

According to an exemplary embodiment of the present invention, the polycarbonate may include the unit represented by Chemical Formula 1 in an amount of 3 wt% or more, 4 wt% or more, 5 wt% or more, 20 wt% or less, 17 wt% or less, and 15 wt% or less, based on the total weight of the polycarbonate.

When the polycarbonate includes the unit represented by Chemical Formula 1 within the above range, a suitable degree of polymerization and high hardness may be obtained.

In the present invention, the content of the structure included in the polycarbonate can be calculated by a typical method from the result after a nuclear magnetic resonance (NMR) analysis on the polycarbonate.

According to an exemplary embodiment of the present invention, A of Chemical Formula 1 may be a substituted or unsubstituted cycloalkylene.

According to an exemplary embodiment of the present invention, A of Chemical Formula 1 may be a substituted or unsubstituted arylene.

According to an exemplary embodiment of the present invention, A of Chemical Formula 1 may be a group in which two or more among a substituted or unsubstituted straight-chained or branched alkylene, a substituted or unsubstituted cycloalkylene, and a substituted or unsubstituted arylene are linked.

According to an exemplary embodiment of the present invention, A of Chemical Formula 1 may be a group in which a substituted or unsubstituted straight-chained or branched alkylene and one or more substituted or branched cycloalkylenes are linked.

According to an exemplary embodiment of the present invention, A of Chemical Formula 1 may be a group in which a substituted or unsubstituted straight-chained or branched alkylene and one or more substituted or unsubstituted arylenes are linked.

According to an exemplary embodiment of the present invention, A of Chemical Formula 1 may be a group in which one or more substituted or unsubstituted straight-chained or branched alkylenes and a substituted or unsubstituted cycloalkylene are linked.

According to an exemplary embodiment of the present invention, A of Chemical Formula 1 may be a group in which a substituted or unsubstituted cycloalkylene and one or more substituted or unsubstituted arylenes are linked.

According to an exemplary embodiment of the present invention, A of Chemical Formula 1 may be selected from the following structural formulae.

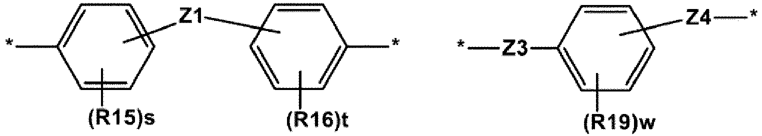

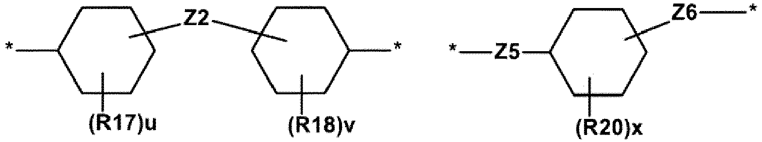

In the structural formulae,
Z1 to Z6 are the same as or different from each other, and are each a single bond, a straight-chained or branched alkylene, or cycloalkylene,
R15 to R20 are the same as or different from each other, and are each hydrogen, a straight-chained or branched alkyl, cycloalkyl, or aryl,
s, t and w are each an integer from 0 to 4,
u, v and x are each an integer from 0 to 10,
when s is 2 or higher, R15's are the same as or different from each other,
when t is 2 or higher, R16's are the same as or different from each other,
when u is 2 or higher, R17's are the same as or different from each other,
when v is 2 or higher, R18's are the same as or different from each other,
when w is 2 or higher, R19's are the same as or different from each other, and
when x is 2 or higher, R20's are the same as or different from each other.

According to an exemplary embodiment of the present invention, A of Chemical Formula 1 may be selected from the following structural formulae.

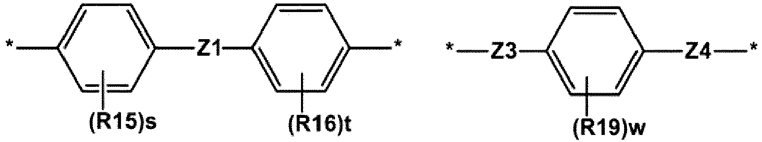

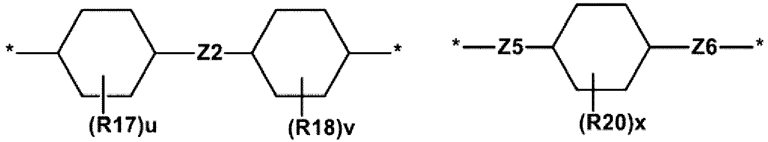

In the above structural formulae, Z1 to Z6, R15 to R20, s, t, u, v, w and x are the same as those described above.

According to an example, Z1 and Z2 may be each a direct bond, a straight-chained or branched alkylene having 1 to 6 carbon atoms, or a cycloalkylene having 3 to 20 carbon atoms.

According to an example, Z1 and Z2 may be each a direct bond, methylene, propylene, or cyclohexylene.

According to an example, Z1 and Z2 may be each a direct bond, methylene, *-C(CH₃)₂-*, or

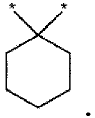

According to an example, Z3 to Z6 are the same as or different from each other, and may be each a direct bond, or a straight-chained or branched alkylene having 1 to 6 carbon atoms.

According to an example, Z3 to Z6 are the same as or different from each other, and may be each a direct bond, methylene, ethylene, or propylene.

According to an example, Z3 to Z6 are the same as or different from each other, and may be each a direct bond, or methylene.

According to an example, R15 to R20 are the same as or different from each other, and are each hydrogen, or an alkyl having 1 to 6 carbon atoms.

According to an example, R15 to R20 are the same as or different from each other, and are each hydrogen, or methyl.

According to an example, s, t, u, v, w and x are each 0, 1, or 2.

According to an exemplary embodiment of the present invention, n and m may be each 1 to 10.

According to an exemplary embodiment of the present invention, the sum of n and m may be 2 to 20, or 2 to 15.

According to an exemplary embodiment of the present invention, o, p, q and r of Chemical Formula 1 are each 1 or 2.

According to an exemplary embodiment of the present invention, R11 to R14 are the same as or different from each other, and are each a halogen, alkyl, or alkoxy.

According to an exemplary embodiment of the present invention, R11 to R14 are the same as or different from each other, and are each an alkyl having 1 to 6, or an alkoxy having 1 to 6.

According to an exemplary embodiment of the present invention, R11 to R14 are the same as or different from each other, and are each methyl, or methoxy.

According to an exemplary embodiment of the present invention, Chemical Formula 1 may be represented by the following Chemical Formula 1-A or 1-B.

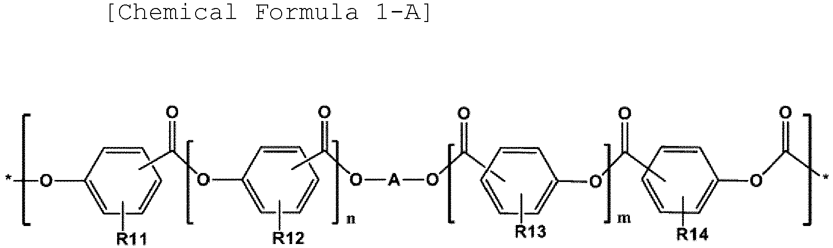

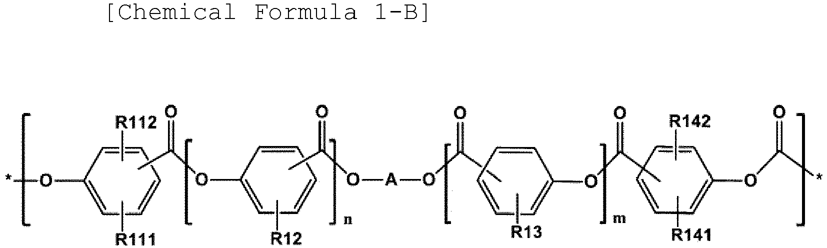

In Chemical Formulae 1-A and 1-B,
R111, R112, R141 and R142 are the same as or different from each other, and are each a halogen, alkyl, or alkoxy, and
the substituents A, R12, R13, n, m and * are the same as those defined in Chemical Formula 1.

According to an exemplary embodiment of the present invention, Chemical Formula 1 may be represented by the following Chemical Formula 1-A-1 or 1-B-1.

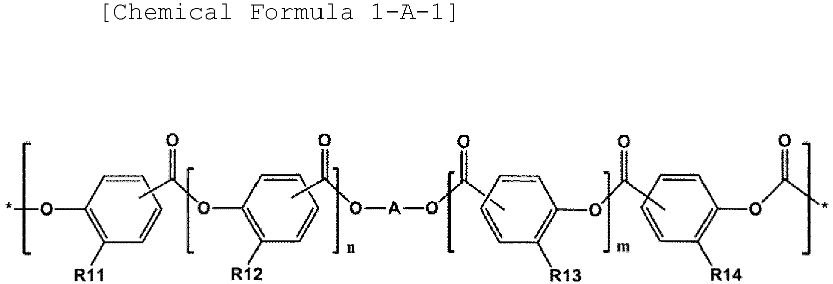

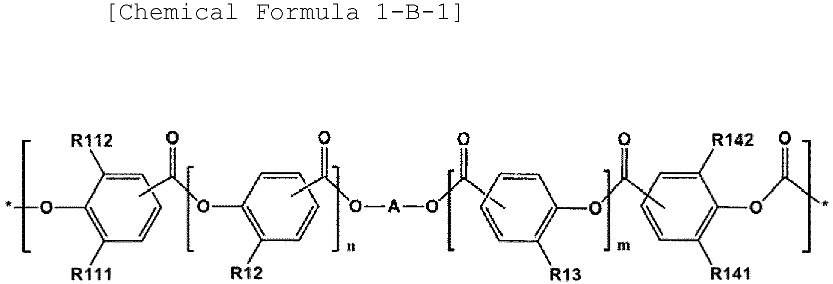

In Chemical Formulae 1-A-1 and 1-B-1,
R111, R112, R141 and R142 are the same as or different from each other, and are each a halogen, alkyl or alkoxy, and
the substituents A, R11-R14, n, m and * are the same as those defined in Chemical Formula 1.

According to an exemplary embodiment of the present invention, 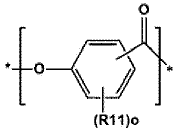 and 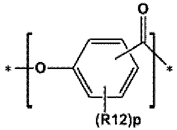 in Chemical Formula 1 may be the same as each other.

According to an exemplary embodiment of the present invention, 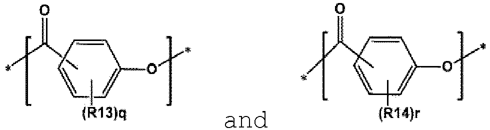 in Chemical Formula 1 may be the same as each other.

According to an exemplary embodiment of the present invention, Chemical Formula 1 may be represented by the following Chemical Formula 1-1.

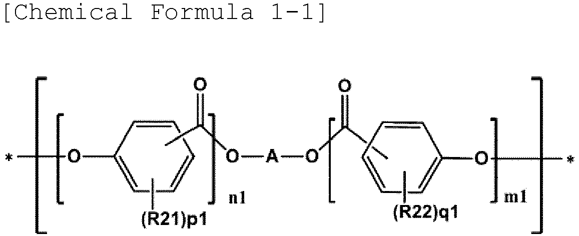

In Chemical Formula 1-1,
R21 and R22 are the same as or different from each other, and are each a halogen, alkyl, or alkoxy,
p1 and q1 are each an integer from 1 to 4,
n1 and m1 are each an integer from 1 to 50,
when p1 or n1 is 2 or higher, R21's are the same as or different from each other,
when q1 or m1 is 2 or higher, R22's are the same as or different from each other, and
the definitions of the other substituents are the same as those defined in Chemical Formula 1.

According to an exemplary embodiment of the present invention, the sum of n1 and m1 of Chemical Formula 1-1 may be 5 to 20.

Furthermore, the weight average molecular weight (Mw) of the polycarbonate according to an exemplary embodiment of the invention may be appropriately adjusted according to the purpose and use, and the weight average molecular weight of the polycarbonate may be 40,000 g/mol or more, or 45,000 g/mol or more, or 48,000 g/mol or more and 60,000 g/mol or less, or 55,000 g/mol or less, or 50,000 g/mol or less, considering that it is possible to exhibit improved weather resistance while maintaining excellent characteristics of the polycarbonate itself, such as transparency and impact strength.

Meanwhile, in the present invention, the weight average molecular weights (Mws) of the polycarbonate and the oligomer used in the preparation thereof may be measured by gel permeation chromatograph (GPC) using a polystyrene (PS) standard using Agilent 1200 series. Specifically, the weight average molecular weights may be measured using an Agilent 1200 series device using a Polymer Laboratories PLgel MIX-B 300 mm length column, and in this case, the measurement temperature is 160°C, the solvent is 1,2,4-trichlorobenzene, and the flow rate is 1 mL/min. The sample of the polycarbonate or oligomer is each prepared at a concentration of 10 mg/10 mL, and then fed in an amount of 200 µL, and the Mw value is induced using a calibration curve formed using a polystyrene standard. In this case, nine types of polystyrene standard products with a molecular weight (g/mol) of 2,000 / 10,000 / 30,000 / 70,000 / 200,000 / 700,000 / 2,000,000 / 4,000,000 / 10,000,000 are used.

According to an exemplary embodiment of the present invention, the polycarbonate further includes a unit of the following Chemical Formula 2.

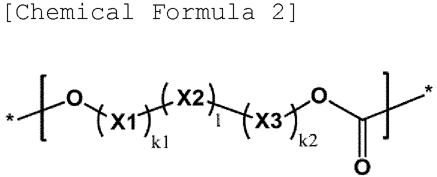

In Chemical Formula 2,
X1 and X3 are the same as or different from each other, and are each a substituted or unsubstituted divalent aliphatic hydrocarbon group, a substituted or unsubstituted divalent isosorbide group, a substituted or unsubstituted arylene, or a substituted or unsubstituted heteroarylene,
X2 is a substituted or unsubstituted divalent aliphatic hydrocarbon group, a substituted or unsubstituted divalent isosorbide group, a substituted or unsubstituted arylene, a substituted or unsubstituted heteroarylene, O, S, SO, SO₂ or CO,
k1 is 0 or 1, provided that when X2 directly bonded to X1 is O, S, SO, SO₂ or CO, k1 is 1,
l is an integer from 1 to 5, and when l is 2 or higher, X2's are the same as or different from each other,
k2 is 0 or 1, provided that when X2 directly bonded to X3 is O, S, SO, SO₂ or CO, k2 is 1,
units of Chemical Formula 2 included in the polycarbonate are the same as or different from each other, and
* means a site linked to the main chain of the polycarbonate.

According to an exemplary embodiment of the present invention, when the polycarbonate includes two or more units of Chemical Formula 2, a plurality of units of Chemical Formula 2 is the same as or different from each other.

According to an exemplary embodiment of the present invention, X1 and X3 of Chemical Formula 2 are the same as or different from each other, and may be each independently a substituted or unsubstituted alkylene, a substituted or unsubstituted cycloalkylene, a substituted or unsubstituted heterocycloalkylene, or a substituted or unsubstituted arylelene.

According to an exemplary embodiment of the present invention, X1 and X3 of Chemical Formula 2 are the same as or different from each other, and may be each independently a substituted or unsubstituted alkylene having 1 to 30 carbon atoms, a substituted or unsubstituted cycloalkylene having 3 to 30 carbon atoms, a substituted or unsubstituted heterocycloalkylene having 2 to 30 carbon atoms, or a substituted or unsubstituted arylene having 6 to 30 carbon atoms.

According to an exemplary embodiment of the present invention, X1 and X3 of Chemical Formula 2 are the same as or different from each other, and may be each independently a substituted or unsubstituted alkylene having 1 to 10 carbon atoms, a substituted or unsubstituted cycloalkylene having 3 to 15 carbon atoms, a substituted or unsubstituted heterocycloalkylene having 2 to 15 carbon atoms, or a substituted or unsubstituted arylene having 6 to 15 carbon atoms.

According to an exemplary embodiment of the present invention, X1 and X3 of Chemical Formula 2 are the same as or different from each other, and may be each independently a substituted or unsubstituted alkylene having 1 to 10 carbon atoms, or a substituted or unsubstituted arylene having 6 to 15 carbon atoms.

According to an exemplary embodiment of the present invention, X2 of Chemical Formula 2 may be a substituted or unsubstituted alkylene, a substituted or unsubstituted cycloalkylene, a substituted or unsubstituted heterocycloalkylene, a substituted or unsubstituted arylene, a substituted or unsubstituted heteroarylene, O, S, SO, SO₂ or CO.

According to an exemplary embodiment of the present invention, X2 of Chemical Formula 2 may be a substituted or unsubstituted alkylene having 1 to 30 carbon atoms, a substituted or unsubstituted cycloalkylene having 3 to 30 carbon atoms, a substituted or unsubstituted heterocycloalkylene having 2 to 30 carbon atoms, a substituted or unsubstituted arylene having 6 to 30 carbon atoms, a substituted or unsubstituted heteroarylene having 2 to 30 carbon atoms, O, S, SO, SO₂ or CO.

According to an exemplary embodiment of the present invention, X2 of Chemical Formula 2 may be a substituted or unsubstituted alkylene having 1 to 10 carbon atoms, a substituted or unsubstituted cycloalkylene having 3 to 15 carbon atoms, a substituted or unsubstituted heterocycloalkylene having 2 to 15 carbon atoms, a substituted or unsubstituted arylene having 6 to 15 carbon atoms, or O.

According to an exemplary embodiment of the present invention, X2 of Chemical Formula 2 may be a substituted or unsubstituted alkylene having 1 to 10 carbon atoms, a substituted or unsubstituted cycloalkylene having 3 to 15 carbon atoms, divalent hexahydrofuro[3,2-b]furan, a substituted or unsubstituted arylene having 6 to 15 carbon atoms, or O.

According to an exemplary embodiment of the present invention, the polycarbonate includes the unit represented by Chemical Formula 2 in an amount of 30 wt% or more, preferably 50 wt% or more, and may include the unit represented by Chemical Formula 2 in an amount of 80 wt% or less, or 70 wt% or less, based on the total weight of the polycarbonate.

According to an exemplary embodiment of the present invention, Chemical Formula 2 may be represented by one of the following Chemical Formulae 3 to 6.

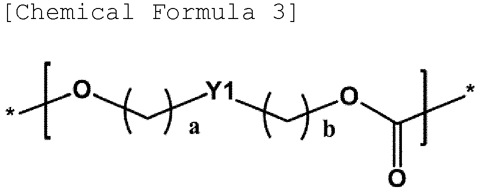

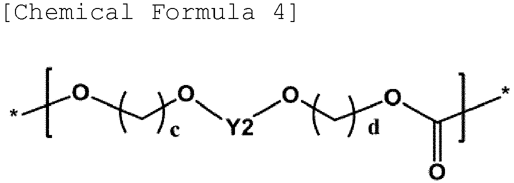

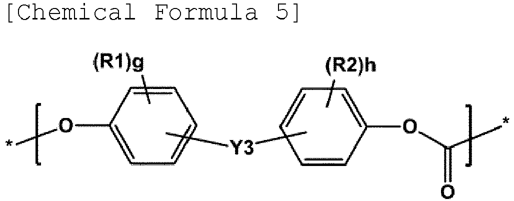

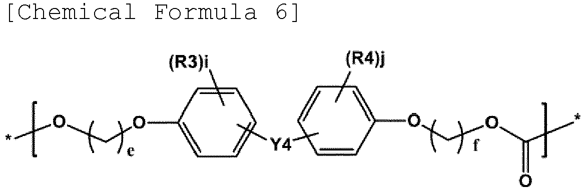

In Chemical Formulae 3 to 6,
Y1 and Y2 are each a substituted or unsubstituted divalent aliphatic hydrocarbon group, a substituted or unsubstituted divalent isosorbide group, a substituted or unsubstituted arylene, or a substituted or unsubstituted heteroarylene,
Y3 and Y4 are each a substituted or unsubstituted straight-chained or branched alkylene, a substituted or unsubstituted cycloalkylene, O, S, SO, SO₂ or CO,
R1 to R4 are the same as or different from each other, and are each hydrogen, a halogen, a substituted or unsubstituted alkyl, or a substituted or unsubstituted alkoxy,
a and b are each an integer from 0 to 10,
c, d, e and f are each an integer from 1 to 10,
g, h, i and j are each an integer from 0 to 4,
when g, h, i and j are each 2 or higher, substituents in the parenthesis are the same as or different from each other,
the units of Chemical Formulae 3 to 6 included in the polycarbonate are the same as or different from each other, and
* means a site linked to the main chain of the polycarbonate.

According to an exemplary embodiment of the present invention, when the polycarbonate each includes two or more units of Chemical Formulae 3 to 6, a plurality of units of Chemical Formulae 3 to 6 are the same as or different from each other.

According to an exemplary embodiment of the present invention, Y1 of Chemical Formula 3 may be a substituted or unsubstituted alkylene, a substituted or unsubstituted cycloalkylene, or a substituted or unsubstituted heterocycloalkylene.

According to an exemplary embodiment of the present invention, Y1 of Chemical Formula 3 may be a substituted or unsubstituted alkylene having 1 to 30 carbon atoms, a substituted or unsubstituted cycloalkylene having 3 to 30 carbon atoms, or a substituted or unsubstituted heterocycloalkylene having 2 to 30 carbon atoms.

According to an exemplary embodiment of the present invention, Y1 of Chemical Formula 3 may be a substituted or unsubstituted alkylene having 1 to 10 carbon atoms, a substituted or unsubstituted cycloalkylene having 3 to 15 carbon atoms, or a substituted or unsubstituted heterocycloalkylene having 2 to 15 carbon atoms.

According to an exemplary embodiment of the present invention, Y1 of Chemical Formula 3 may be a substituted or unsubstituted methylene, a substituted or unsubstituted cyclohexylene, or a substituted or unsubstituted divalent hexahydrofuro[3,2-b]furan.

According to an exemplary embodiment of the present invention, Y2 of Chemical Formula 4 may be a substituted or unsubstituted cycloalkylene, or a substituted or unsubstituted heterocycloalkylene.

According to an exemplary embodiment of the present invention, Y2 of Chemical Formula 4 may be a substituted or unsubstituted cycloalkylene having 3 to 15 carbon atoms, or a substituted or unsubstituted heterocycloalkylene having 2 to 15 carbon atoms.

According to an exemplary embodiment of the present invention, Y2 of Chemical Formula 4 may be a substituted or unsubstituted cyclohexylene, or a substituted or unsubstituted divalent hexahydrofuro[3,2-b]furan.

According to an exemplary embodiment of the present invention, Y3 of Chemical Formula 5 may be a substituted or unsubstituted alkylene, or a substituted or unsubstituted cycloalkylene.

According to an exemplary embodiment of the present invention, Y3 of Chemical Formula 5 may be a substituted or unsubstituted alkylene having 1 to 30 carbon atoms, or a substituted or unsubstituted cycloalkylene having 2 to 30 carbon atoms.

According to an exemplary embodiment of the present invention, Y3 of Chemical Formula 5 may be a substituted or unsubstituted alkylene having 1 to 10 carbon atoms, or a substituted or unsubstituted cycloalkylene having 2 to 15 carbon atoms.

According to an exemplary embodiment of the present invention, Y3 of Chemical Formula 5 may be a substituted or unsubstituted straight-chained or branched alkylene having 1 to 5 carbon atoms, or a substituted or unsubstituted cyclohexylene.

According to an exemplary embodiment of the present invention, Y4 of Chemical Formula 6 may be a substituted or unsubstituted alkylene.

According to an exemplary embodiment of the present invention, Y4 of Chemical Formula 6 may be a substituted or unsubstituted alkylene having 1 to 30 carbon atoms.

According to an exemplary embodiment of the present invention, Y4 of Chemical Formula 6 may be a substituted or unsubstituted alkylene having 1 to 10 carbon atoms.

According to an exemplary embodiment of the present invention, Y4 of Chemical Formula 6 may be a substituted or unsubstituted straight-chained or branched alkylene having 1 to 5 carbon atoms.

According to an exemplary embodiment of the present invention, R1 to R4 of Chemical Formulae 5 and 6 are the same as or different from each other, and may be each a substituted or unsubstituted alkyl having 1 to 10 carbon atoms.

According to an exemplary embodiment of the present invention, R1 to R4 of Chemical Formulae 5 and 6 are the same as or different from each other, and may be each a substituted or unsubstituted alkyl having 1 to 5 carbon atoms.

According to an exemplary embodiment of the present invention, R1 to R4 of Chemical Formulae 5 and 6 are the same as or different from each other, and may be each a substituted or unsubstituted methyl.

According to an exemplary embodiment of the present invention, Chemical Formula 3 may be represented by any one of the following structures.

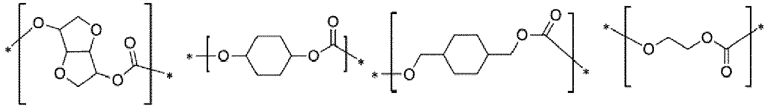

According to an exemplary embodiment of the present invention, Chemical Formula 4 may be represented by any one of the following structures.

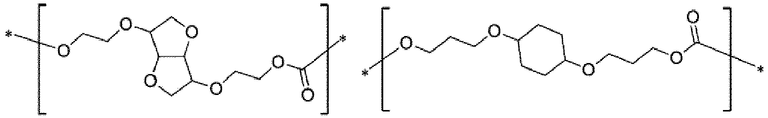

According to an exemplary embodiment of the present invention, Chemical Formula 5 may be represented by any one of the following structures.

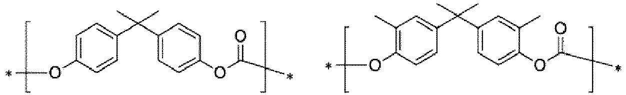

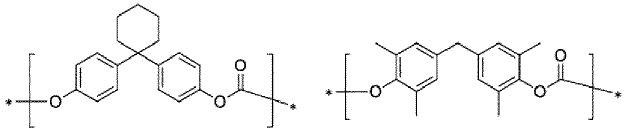

According to an exemplary embodiment of the present invention, Chemical Formula 6 may be represented by any one of the following structures.

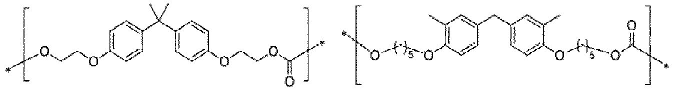

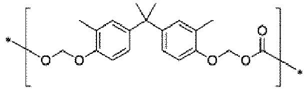

According to an exemplary embodiment of the present invention, the polycarbonate may have an end group selected from alcohol, carbonate and phenol.

The polycarbonate according to an exemplary embodiment of the present invention has high hardness and excellent heat resistance compared to the polycarbonate in the related art.

According to an exemplary embodiment of the present invention, when the impact strength of the polycarbonate is measured at 23°C in accordance with ASTM D256 (1/8 inch, Notched Izod), the impact strength may be 250 J/m or more, 270 J/m or more, or 300 J/m or more. The upper limit of the impact strength is not particularly limited, but may be, for example, 500 J/m or less, or 450 J/m or less.

Specifically, the Izod impact strength measurement method is a method using a pendulum with a predetermined weight, and the impact strength is obtained by dividing an absorption energy obtained as a returning height when a test specimen is hit by the pendulum and rotated by the cross-sectional area at the notch part of the test specimen.

According to an exemplary embodiment of the present invention, when the pencil hardness of the polycarbonate is measured at an angle of 45 degrees under a load of 50 g using a pencil hardness tester (Cometech) at a temperature of 23°C and in accordance with ASTM D3363, the pencil hardness may be B or more, or HB or more.

According to an exemplary embodiment of the present invention, the pencil hardness of the polycarbonate may be B or HB.

Another exemplary embodiment of the present invention provides a method for preparing a polycarbonate including the unit represented by the above-described Chemical Formula 1, the method including: polymerizing a composition including a compound of the following Chemical Formula 11 and a carbonate precursor.

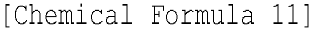

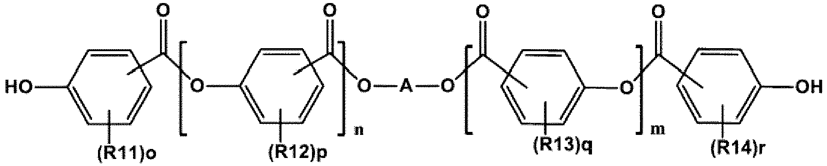

In Chemical Formula 11, the definition of the substituents A, R11-R14, n, m, o, p, q and r are the same as that in Chemical Formula 1.

Preferred examples of the substituents A, R11-R14, n, m, o, p, q and r of Chemical Formula 11 are the same as the description related to the above-described Chemical Formula 1.

According to an exemplary embodiment of the present invention, Chemical Formula 11 may be represented by the following Chemical Formula 11-1.

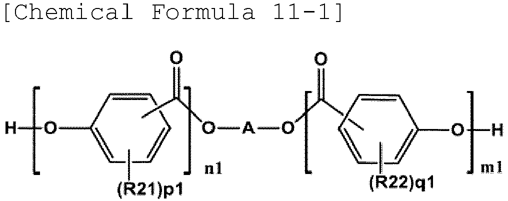

In Chemical Formula 11-1,
R21 and R22 are the same as or different from each other, and are each a halogen, alkyl or alkoxy,
p1 and q1 are each an integer from 1 to 4,
n1 and m1 are each an integer from 1 to 50,
when p1 or n1 is 2 or higher, R21's are the same as or different from each other,
when q1 or m1 is 2 or higher, R22's are the same as or different from each other, and
the definitions of the other substituents are the same as those defined in Chemical Formula 1.

According to an exemplary embodiment of the present invention, the compound of Chemical Formula 11 may be represented by the following structures.

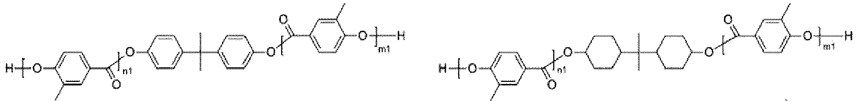

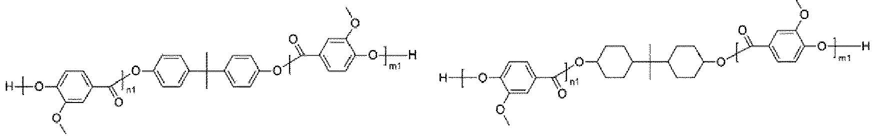

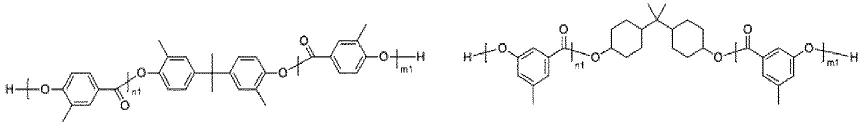

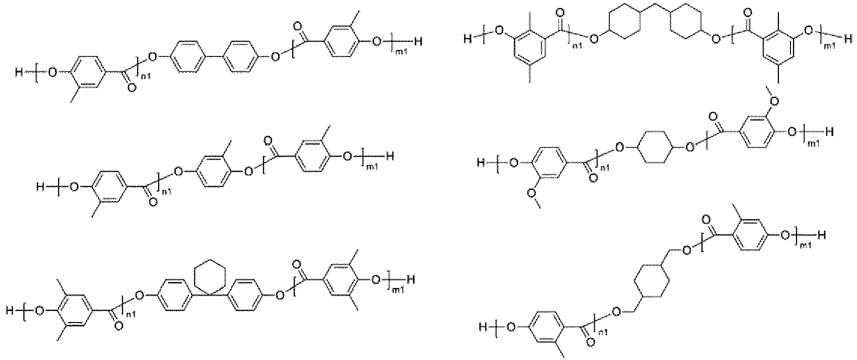

In the structural formulae, n1 and m1 are each an integer from 1 to 50.

The compound of Chemical Formula 11 may be prepared by the following Reaction Formula.

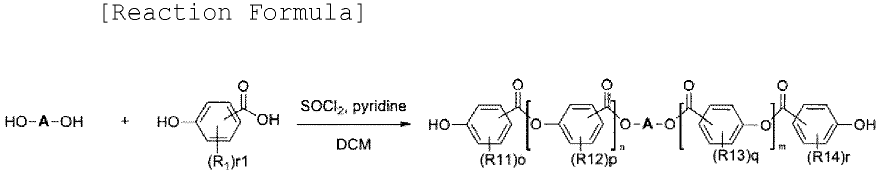

In Reaction Formula, A, R11 to R14, m, n, o, p, q and r are the same as the definitions of Chemical Formula 1, R₁ is a halogen, alkyl or alkoxy, r1 is an integer from 0 to 4, and when r1 is 2 or higher, R₁'s are the same as or different from each other.

A diol compound, a carboxylic acid compound and pyridine are put into dichloromethane (DCM), the resulting mixture is stirred, and then thionyl chloride (SOCl₂) is slowly added dropwise thereto at low temperature. After the mixture is stirred at room temperature for 10 hours or more, a compound of Chemical Formula 11 is obtained by terminating the reaction.

According to an exemplary embodiment of the present invention, the carbonate precursor may be represented by the following Chemical Formula 12.

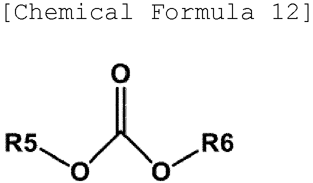

In Chemical Formula 12,
R5 and R6 are the same as or different from each other, and are each a substituted or unsubstituted straight-chained or branched alkyl, a substituted or unsubstituted cycloalkyl, a substituted or unsubstituted aryl, or a substituted or unsubstituted heteroaryl.

The carbonate precursor serves to link the compound of Chemical Formula 11, and an additional comonomer, if necessary, and specific examples thereof include phosgene, diphosgene, triphosgene, bromophosgene, dimethyl carbonate, diethyl carbonate, dibutyl carbonate, dicyclohexyl carbonate, diphenyl carbonate, ditolyl carbonate, bis(chlorophenyl) carbonate, m-cresyl carbonate, dinaphthyl carbonate, bis(diphenyl) carbonate, bishaloformate, or the like, and any one of them or a mixture of two or more thereof may be used.

According to an exemplary embodiment of the present invention, the carbonate precursor may be triphosgene.

The unit of the above-described Chemical Formula 1 may be formed by polymerizing the compound of Chemical Formula 11 with the carbonate precursor of Chemical Formula 12.

The compound of Chemical Formula 11 may be used in an amount of 8 parts by weight to 40 parts by weight, or 12 parts by weight to 30 parts by weight, based on 100 parts by weight of the carbonate precursor of Chemical Formula 12.

According to an exemplary embodiment of the present invention, the composition used in the polymerization step may further include a compound of the following Chemical Formula 21.

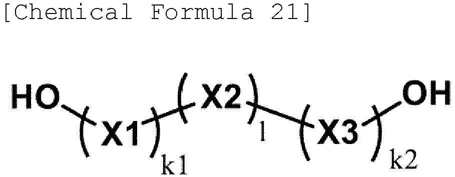

In Chemical Formula 21,
X1 and X3 are each a substituted or unsubstituted divalent aliphatic hydrocarbon group, a substituted or unsubstituted divalent isosorbide group, a substituted or unsubstituted arylene, or a substituted or unsubstituted heteroarylene,
X2 is a substituted or unsubstituted divalent aliphatic hydrocarbon group, a substituted or unsubstituted divalent isosorbide group, a substituted or unsubstituted arylene, a substituted or unsubstituted heteroarylene, O, S, SO, SO₂ or CO,
k1 is 0 or 1, provided that when X2 directly bonded to X1 is O, S, SO, SO₂ or CO, k1 is 1,
l is an integer from 1 to 5, and when l is 2 or higher, X2's are the same as or different from each other, and
k2 is 0 or 1, provided that when X2 directly bonded to X3 is O, S, SO, SO₂ or CO, k2 is 1.

The compound of Chemical Formula 21 may form the unit of the above-described Chemical Formula 2 by polymerization. The compound of Chemical Formula 21 may be used in an amount of 100 parts by mole to 400 parts by mole, for example, 200 parts by mole to 300 parts by mole, based on 100 parts by mole of the carbonate precursor of Chemical Formula 12.

The compound of Chemical Formula 21 may be used in an amount of 100 parts by weight to 350 parts by weight, for example, 150 parts by weight to 250 parts by weight, based on 100 parts by weight of the carbonate precursor of Chemical Formula 12.

According to an exemplary embodiment of the present invention, Chemical Formula 21 may be represented by the following Chemical Formula 31, 41, 51 or 61.

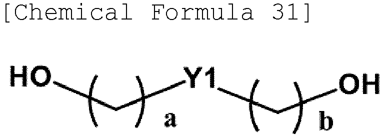

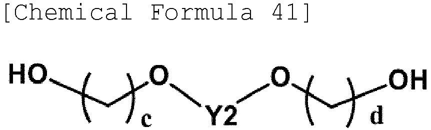

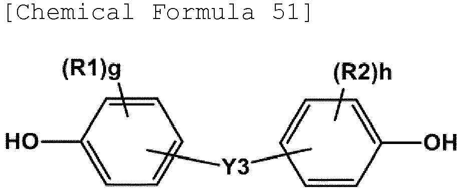

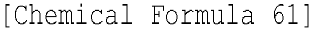

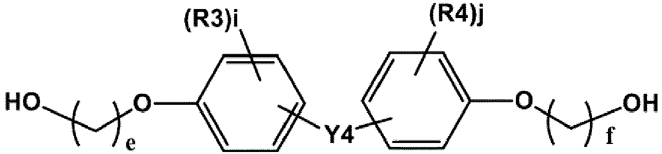

In Chemical Formulae 31, 41, 51 and 61,
Y1 and Y2 are each a substituted or unsubstituted divalent aliphatic hydrocarbon group, a substituted or unsubstituted divalent isosorbide group, a substituted or unsubstituted arylene, or a substituted or unsubstituted heteroarylene,
Y3 and Y4 are each a substituted or unsubstituted straight-chained or branched alkylene, a substituted or unsubstituted cycloalkylene, O, S, SO, SO₂ or CO,
R1 to R4 are the same as or different from each other, and are each hydrogen, a halogen, a substituted or unsubstituted alkyl, or a substituted or unsubstituted alkoxy,
a and b are each an integer from 0 to 10,
c, d, e and f are each an integer from 1 to 10,
g, h, i and j are each an integer from 0 to 4, and
when g, h, i and j are each 2 or higher, substituents in the parenthesis are the same as or different from each other.

Preferred examples of the substituents Y1-Y4 and R1-R4 of Chemical Formulae 31, 41, 51 and 61 are the same as the description related to the above-described Chemical Formulae 3 to 6.

For the polymerization, methods known in the art may be used.

It is preferred that the polymerization is performed by interfacial polymerization, the polymerization reaction can be performed at normal pressure and low temperature during interfacial polymerization, and the molecular weight is easily adjusted.

Further, it is preferred that the polymerization temperature is 0°C to 40°C and the reaction time is 10 minutes to 5 hours. In addition, it is preferred that the pH during the reaction is maintained at 9 or more, or 11 or more.

Furthermore, a solvent that can be used in the polymerization is not particularly limited as long as the solvent is used in the polymerization of polycarbonate in the art, and as an example, a halogenated hydrocarbon such as dichloromethane (DCM) and chlorobenzene may be used.

Further, it is preferred that the polymerization is performed in the presence of an acid binder, and as the acid binder, an alkali metal hydroxide such as sodium hydroxide or potassium hydroxide or an amine compound such as pyridine may be used.

In addition, it is preferred that in order to adjust the molecular weight of the polycarbonate during the polymerization, the polymerization is performed in the presence of a molecular weight adjuster. As the molecular weight adjuster, an alkylphenol having 1 to 20 carbon atoms may be used, and specific examples thereof include p-tert-butylphenol, p-cumylphenol, decylphenol, dodecylphenol, tetradecylphenol, hexadecylphenol, octadecylphenol, eicosylphenol, docosylphenol, or triacontylphenol. The molecular weight adjuster may be introduced before initiation of the polymerization, during initiation of the polymerization, or after initiation of the polymerization. The molecular weight adjuster may be used in an amount of 10 parts by weight to 40 parts by weight based on 100 parts by weight of the compound represented by Chemical Formula 11.

When the compound represented by Chemical Formula 21 is also included, the compound represented by Chemical Formula 21 may be used in an amount of 0.01 to 10 parts by weight, preferably 0.1 to 6 parts by weight, based on total 100 parts by weight of the compound represented by Chemical Formula 11 and the compound represented by Chemical Formula 21, and a desired molecular weight may be obtained within this range.

Furthermore, to promote the polymerization reaction, a reaction promoter such as a tertiary amine compound such as triethylamine, tetra-n-butylammonium bromide, or tetra-n-butylphosphonium bromide, a quaternary ammonium compound, and a quaternary phosphonium compound may be additionally used.

According to an exemplary embodiment of the present invention, the composition used in the polymerization may further include triethylamine as a coupling agent.

Still another exemplary embodiment of the present invention provides a composition including the polycarbonate according to the above-described exemplary embodiments.

The polycarbonate resin composition of an exemplary embodiment may further include a heat stabilizer in order to prevent a decrease in molecular weight or a deterioration in color of a resin molded article.

Examples of the heat stabilizer include phosphorous acid, phosphoric acid, phosphonous acid, phosphonic acid, esters thereof, and the like, and specific examples thereof include use triphenylphosphite, tris(nonylphenyl)phosphite, tris(2,4-di-tert-butylphenyl)phosphite, tridecylphosphite, trioctylphosphite, trioctadecylphosphite, didecylmonophenylphosphite, dioctylmonophenylphosphite, diisopropylmonophenylphosphite, monobutyldiphenylphosphite, monodecyldiphenylphosphite, monooctyldiphenylphosphite, bis(2,6-di-tert-butyl-4-methylphenyl)pentaerythritoldiphosphite, 2,2-methylenebis(4,6-di-tert-butylphenyl)octylphosphite, bis(nonylphenyl)pentaerythritoldiphosphite, bis(2,4-di-tert-butylphenyl)pentaerythritoldiphosphite, distearylpentaerythritoldiphosphite, tributylphosphate, triethylphosphate, trimethylphosphate, triphenylphosphate, diphenylmonoorthoxenylphosphate, dibutylphosphate, dioctylphosphate, diisopropylphosphate, 4,4'-biphenylenediphosphinic acid tetrakis(2,4-di-tert-butyl phenyl), benzenephosphonic acid dimethyl, benzenephosphonic acid diethyl, benzenephosphonic acid dipropyl or a mixture of two or more thereof.

The heat stabilizer may be used in a content of 0.0001 part by weight to 1 part by weight, or 0.01 part by weight to 0.1 part by weight, based on 100 parts by weight of the polycarbonate resin. As the stabilizer is used in the above content, it is possible to prevent a decrease in the molecular weight or discoloration of the resin without causing bleeding of the additive, and the like.

According to another example, a composition including the polycarbonate may further include a typically known antioxidant.

Specific examples of the antioxidant include pentaerythritol tetrakis(3-mercaptopropionate), pentaerythritol tetrakis(3-laurylthiopropionate), glycerol-3-stearyl thiopropionate, triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxyhydrocinnamide), 3,5-di-tert-butyl-4-hydroxybenzylphosphonate-diethyl ester, tris(3,5-di-tert-butyl-4-hydroxybenzyl)isocyanurate, 4,4'-biphenylenediphospinic acid tetrakis(2,4-di-tert-butylphenyl), 3,9-bis{1,1-dimethyl-2-[β-(3-tert-butyl-4-hydroxy-5-methylphenyl)propionyloxy]ethyl}-2,4,8,10-tetraoxaspiro(5,5)undecane or a mixture of two or more thereof.

The antioxidant may be used in a content of 0.0001 part by weight to 1 part by weight, or 0.001 part by weight to 0.5 part by weight, based on 100 parts by weight of the polycarbonate resin.

According to another example, a composition including the polycarbonate may further include a lubricant, and may include, for example, pentaerythritol tetrastearate.

The lubricant may be used in a content of 0.0001 part by weight to 1 part by weight, 0.005 part by weight to 0.5 part by weight, or 0.01 part by weight to 0.2 part by weight, based on 100 parts by weight of the polycarbonate.

Yet another exemplary embodiment of the present invention provides a molded article prepared from a composition including the polycarbonate according to the above-described exemplary embodiments. As described above, since the polycarbonate including the unit represented by Chemical Formula 1 has excellent hardness or heat resistance, the molded article according to the present invention has a wider range of applications than molded articles prepared from a polycarbonate used in the related art. In addition, when the polycarbonate further includes a repeating unit represented by Chemical Formula 2, the range of applications may be further expanded because desired physical properties can be implemented by adjusting the weight ratio of the units represented by Chemical Formulae 1 and 2.

The composition or molded article may further include one or more selected from the group consisting of a heat stabilizer, an antioxidant, a plasticizer, an anti-static agent, a nucleating agent, a flame retardant, a lubricant, an impact modifier, a fluorescent brightener, a UV absorber, a pigment and a dye, if necessary, in addition to the aforementioned polycarbonate.

As an example of a method of preparing the molded article, it is possible to include mixing the aforementioned polycarbonate and other additives well using a mixer, preparing the resulting mixture as a pellet by extrusion molding the mixture using an extruder, drying the pellet, and then injecting the pellet using an injection molder.

### EXAMPLES

### Experimental Example 1. Preparation of polycarbonate

### Example 1.

### (1) Preparation of Oligomer 1

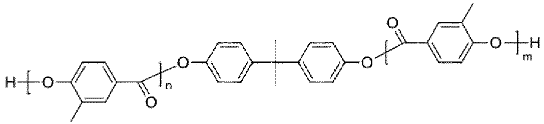

Oligomer 1 (m+n = about 9)

After bisphenol A (BPA) (1 equiv), 4-hydroxy-3-methylbenzoic acid (4.0 equiv), and pyridine (12.0 equiv) were dissolved in DCM, thionyl chloride (4.4 equiv) was slowly added dropwise thereto at a low temperature (-40°C to -20°C) . The reaction was performed at room temperature (20°C to 25°C) for 10 hours or more and terminated, and then pyridine salts and side reactants were removed using an aqueous solution of HCl and K₂CO₃. Then, after the organic layer was separated, the solvent was removed under reduced pressure, the product was completely dissolved in tetrahydrofuran (THF), and then Oligomer 1 was obtained using methanol (MeOH). (Weight average molecular weight of Oligomer 1: 1,450 g/mol)

### (2) Preparation of Polycarbonate 1

620 g of water, 112.61 g of BPA, 11.27 g (10 wt% based on the total weight of the BPA) of Oligomer 1, 102.5 g of a 40 wt% aqueous NaOH solution, and 200 ml of DCM were introduced into a 2 L main reactor equipped with a nitrogen purge and a condenser and capable of maintaining room temperature with a circulator, and the resulting mixture was stirred for several minutes.

Nitrogen purging was stopped, 62 g (0.209 mol) of triphosgene and 120 g of DCM were put into a 1 L round bottom flask and the triphosgene was dissolved, and then the dissolved triphosgene solution was slowly added to the main reactor in which a solution of BPA and Oligomer 1 was dissolved, and when the addition was completed, 2.66 g (0.177 mol) of p-tert-butylphenol (PTBP) was added thereto and the resulting mixture was stirred for about 10 minutes. After the stirring was completed, 97 g of a 40 wt% aqueous NaOH solution was added thereto, and then 1.16 g of triethylamine (TEA) as a coupling agent was added thereto. In this case, the pH of the reaction was maintained at 11 to 13.

The pH was lowered to 3 to 4 by adding HCl thereto in order to terminate the reaction after a while such that the reaction could be sufficiently performed. Then, after the polymer layer and the aqueous layer were separated by stopping the stirring, the aqueous layer was removed, and a process of washing with water by again adding pure H₂O thereto was repeated 3 to 5 times.

When the washing with water was completely performed, only the polymer layer was extracted, and polymer crystals were obtained by a reprecipitation method using a non-solvent using methanol, H₂O, and the like. In this case, prepared Polycarbonate 1 was found to have a weight average molecular weight of 45,000 g/mol.

As a result of NMR analysis, it was confirmed that a repeating unit derived from Oligomer 1 was included in an amount of 10 wt% based on the weight of the entire repeating unit of Polycarbonate 1.

### Example 2: Preparation of Oligomer 2 and Polycarbonate 2

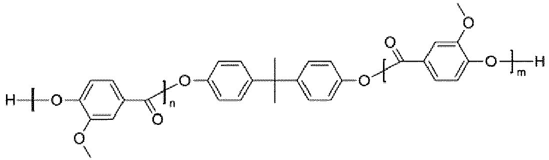

Oligomer 2 (m+n = about 10)

Oligomer 2 was prepared in the same manner as in Example 1, except that vanillic acid was used instead of 4-hydroxy-3-methylbenzoic acid in Example 1, and Polycarbonate 2 was prepared in the same manner as in Example 1, except that Oligomer 2 was used instead of Oligomer 1. In this case, prepared Oligomer 2 was found to have a weight average molecular weight of 1,700 g/mol, and Polycarbonate 2 was found to have a weight average molecular weight of 41,000 g/mol.

As a result of NMR analysis, it was confirmed that a repeating unit derived from Oligomer 2 was included in an amount of 8 wt% based on the weight of the entire repeating unit of Polycarbonate 2.

### Example 3: Preparation of Oligomer 3 and Polycarbonate 3

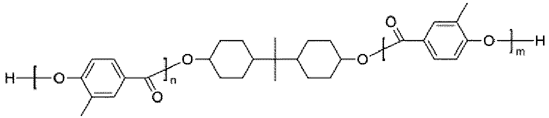

Oligomer 3 (m+n = about 12)

Oligomer 3 was prepared in the same manner as in Example 1, except that 2,2-bis(4-hydroxycyclohexyl)propane was used instead of BPA in Example 1, and Polycarbonate 3 was prepared in the same manner as in Example 1, except that Oligomer 3 was used instead of Oligomer 1. In this case, Oligomer 3 prepared was found to have a weight average molecular weight of 1,800 g/mol, and Polycarbonate 3 was found to have a weight average molecular weight of 40,000 g/mol.

As a result of NMR analysis, it was confirmed that a repeating unit derived from Oligomer 3 was included in an amount of 10 wt% based on the weight of the entire repeating unit of Polycarbonate 3.

### Example 4: Preparation of Oligomer 4 and Polycarbonate 4

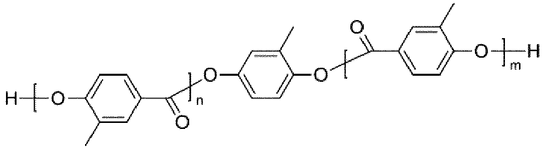

Oligomer 4 (m+n = about 11)

Oligomer 4 was prepared in the same manner as in Example 1, except that methylhydroquinone was used instead of BPA in Example 1, and Polycarbonate 4 was prepared in the same manner as in Example 1, except that Oligomer 4 was used instead of Oligomer 1. In this case, prepared Oligomer 4 was found to have a weight average molecular weight of 1,600 g/mol, and Polycarbonate 4 was found to have a weight average molecular weight of 43,000 g/mol.

As a result of NMR analysis, it was confirmed that a repeating unit derived from Oligomer 4 was included in an amount of 9 wt% based on the weight of the entire repeating unit of Polycarbonate 4.

### Example 5: Preparation of Oligomer 5 and Polycarbonate 5

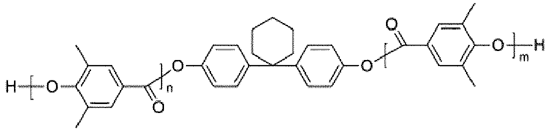

Oligomer 5 (m+n = about 6)

Oligomer 5 was prepared in the same manner as in Example 1, except that 1,1-bis(4-hydroxyphenyl)cyclohexane and 4-hydroxy-3,5-dimethylbenozoic acid were used instead of BPA and 4-hydroxy-3-methylbenzoic acid, respectively, in Example 1, and Polycarbonate 5 was prepared in the same manner as in Example 1, except that Oligomer 5 was used instead of Oligomer 1. In this case, Oligomer 5 prepared was found to have a weight average molecular weight of 1,200 g/mol, and Polycarbonate 5 was found to have a weight average molecular weight of 45,000 g/mol.

As a result of NMR analysis, it was confirmed that a repeating unit derived from Oligomer 5 was included in an amount of 5 wt% based on the weight of the entire repeating unit of Polycarbonate 5.

### Example 6: Preparation of Oligomer 6 and Polycarbonate 6

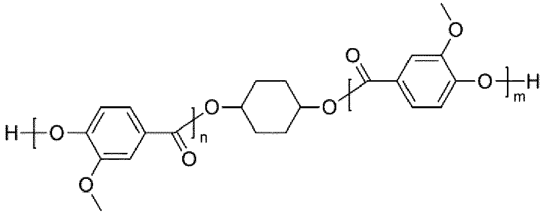

Oligomer 6 (m+n = about 7)

Oligomer 6 was prepared in the same manner as in Example 1, except that 1,4-cyclohexanediol and vanillic acid were used instead of BPA and 4-hydroxy-3-methylbenzoic acid, respectively, in Example 1, and Polycarbonate 6 was prepared in the same manner as in Example 1, except that Oligomer 6 was used instead of Oligomer 1. In this case, Oligomer 6 prepared was found to have a weight average molecular weight of 1,200 g/mol, and Polycarbonate 6 was found to have a weight average molecular weight of 49,000 g/mol.

As a result of NMR analysis, it was confirmed that a repeating unit derived from Oligomer 6 was included in an amount of 8 wt% based on the weight of the entire repeating unit of Polycarbonate 6.

### Comparative Example 1.

### (1) Preparation of Oligomer A

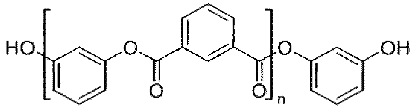

Oligomer A (n = about 9)

After resorcinol (2.2 equiv) and TEA (3.0 equiv) were dissolved in DCM, terephthaloyl chloride (1.0 equiv was dissolved in DCM and the resulting solution was slowly added dropwise at low temperature. After the reaction was terminated by stirring at room temperature for 10 hours or more, TEA salts and side reactants were removed by adding an aqueous solution of HCl and K₂CO₃ thereto. Oligomer A synthesized as described above was introduced into the polycarbonate preparation process without another separation operation.

### (2) Preparation of Polycarbonate A

620 g of water, 115.077g of BPA, 11.51 g (10 wt% based on the total weight of the BPA) of Oligomer A, 102.5 g of a 40 wt% aqueous NaOH solution, and 200 ml of DCM were introduced into a 2 L main reactor equipped with a nitrogen purge and a condenser and capable of maintaining room temperature with a circulator, and the resulting mixture was stirred for several minutes.

Nitrogen purging was stopped, 62 g of triphosgene and 120 g of DCM were put into a 1 L round bottom flask and the triphosgene was dissolved, and then the dissolved triphosgene solution was slowly added to the main reactor in which a solution of BPA and Oligomer A was dissolved, and when the addition was completed, 2.66 g of p-tert-butylphenol (PTBP) was added thereto and the resulting mixture was stirred for about 10 minutes. After the stirring was completed, 97 g of a 40 wt% NaOH aqueous solution was added thereto, and then 1.16 g of TEA as a coupling agent was added thereto. In this case, the pH of the reaction was maintained at 11 to 13. The pH was lowered to 3 to 4 by adding HCl thereto in order to terminate the reaction after a while such that the reaction could be sufficiently performed. Then, after the polymer layer and the aqueous layer were separated by stopping the stirring, the aqueous layer was removed, and a process of washing with water by again adding pure H₂O thereto was repeated 3 to 5 times.

When the washing with water was completely performed, only the polymer layer was extracted, and polymer crystals were obtained by a reprecipitation method using a non-solvent using methanol, H₂O, and the like. In this case, Polycarbonate A prepared was found to have a weight average molecular weight of 46,000 g/mol.

As a result of NMR analysis, it was confirmed that a repeating unit derived from Oligomer A was included in an amount of 10 wt% based on the weight of the entire repeating unit of Polycarbonate A.

### Comparative Example 2. Preparation of Oligomer B and Polycarbonate B

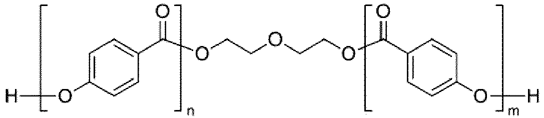

Oligomer B (m+n = about 11)

Oligomer B was prepared in the same manner as in Example 1, except that diethylene glycol and 4-hydroxybenzoic acid were used instead of BPA and 4-hydroxy-3-methylbenzoic acid, respectively, in Example 1, and Polycarbonate B was prepared in the same manner as in Example 1, except that Oligomer B was used instead of Oligomer 1. In this case, prepared Oligomer B was found to have a weight average molecular weight of 1,400 g/mol, and Polycarbonate B was found to have a weight average molecular weight of 38,000 g/mol.

As a result of NMR analysis, it was confirmed that a repeating unit derived from Oligomer B was included in an amount of 7 wt% based on the weight of the entire repeating unit of Polycarbonate B.

### Comparative Example 3. Preparation of Oligomer C and Polycarbonate C

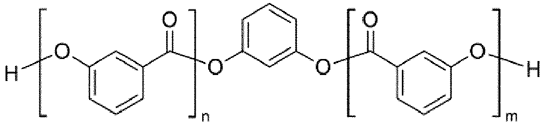

Oligomer C (m+n = about 18)

Oligomer C was prepared in the same manner as in Example 1, except that resorcinol and 3-hydroxybenzoic acid were used instead of BPA and 4-hydroxy-3-methylbenzoic acid, respectively, in Example 1, and Polycarbonate C was prepared in the same manner as in Example 1, except that Oligomer C was used instead of Oligomer 1. In this case, prepared Oligomer C was found to have a weight average molecular weight of 2,300 g/mol, and Polycarbonate C was found to have a weight average molecular weight of 46,000 g/mol.

As a result of NMR analysis, it was confirmed that a repeating unit derived from Oligomer C was included in an amount of 8 wt% based on the weight of the entire repeating unit of Polycarbonate C.

### Comparative Example 4. Preparation of Oligomer D and Polycarbonate D

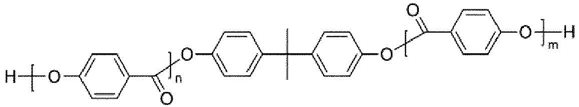

Oligomer D (m+n = about 11)

Oligomer D was prepared in the same manner as in Example 1, except that 4-hydroxybenzoic acid was used instead of 4-hydroxy-3-methylbenzoic acid in Example 1, and Polycarbonate D was prepared in the same manner as in Example 1, except that Oligomer D was used instead of Oligomer 1. In this case, prepared Oligomer D was found to have a weight average molecular weight of 1,800 g/mol, and Polycarbonate D was found to have a weight average molecular weight of 45,000 g/mol.

As a result of NMR analysis, it was confirmed that a repeating unit derived from Oligomer D was included in an amount of 9 wt% based on the weight of the entire repeating unit of Polycarbonate D.

### Comparative Example 5. Preparation of Oligomer E and Polycarbonate E

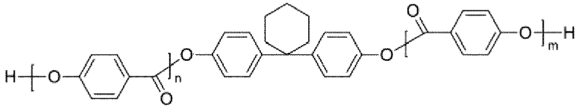

Oligomer E (m+n = about 15)

Oligomer E was prepared in the same manner as in Example 1, except that 1,1-bis(4-hydroxyphenyl)cyclohexane and 4-hydroxybenzoic acid were used instead of BPA and 4-hydroxy-3-methylbenzoic acid, respectively, in Example 1, and Polycarbonate E was prepared in the same manner as in Example 1, except that Oligomer E was used instead of Oligomer 1. In this case, prepared Oligomer E was found to have a weight average molecular weight of 2,000 g/mol, and Polycarbonate E was found to have a weight average molecular weight of 48,000 g/mol.

As a result of NMR analysis, it was confirmed that a repeating unit derived from Oligomer E was included in an amount of 7 wt% based on the weight of the entire repeating unit of Polycarbonate E.

### Experimental Example 2. Evaluation of physical properties of polycarbonate

0.050 part by weight of tris(2,4-di-tert-butylphenyl)phosphite, 0.010 part by weight of octadecyl-3-(3,5-di-tert-butyl-4-hydroxyphenyl)propionate and 0.030 part by weight of pentaerythritol tetrastearate were added to 100 parts by weight of each of the polycarbonate resins prepared in the Examples and the Comparative Examples, the resulting mixture was pelletized using HAAKE Mini CTW with a vent attached, and then a test specimen was prepared by injection molding the pellet at a cylinder temperature of 300°C and a mold temperature of 120°C using an HAAKE Minijet injection molding system.

The characteristics of these injection test specimens or polycarbonates were measured by the following methods, and the results are shown in the following Table 1.
1) Weight average molecular weight (g/mol): Measured by calibration with PS standard using Agilent 1200 series.
2) Fluidity (MI): Measured in accordance with ASTM D1238 (under conditions of 300°C, 1.2 kg).
3) Izod room temperature impact strength (J/m): Measured at 23°C in accordance with ASTM D256 (1/8 inch, Notched Izod).

- Pencil hardness: Measured with a pencil having a strength of 2B, B, and HB at an angle of 45 degrees under a load of 50 g in accordance with ASTM D3363 using a pencil hardness tester (Cometech) at 23°C.

**[Table 1]**

| | Polycarbonate resin | Weight average molecular weight (g/mol) | MI (g/10 min) | Impact strength (J/m) | Pencil hardness |
|---|---|---|---|---|---|
| Example 1 | Polycarbonate 1 | 45, 000 | 15.4 | 300 | HB |
| Example 2 | Polycarbonate 2 | 41, 000 | 14.0 | 280 | HB |
| Example 3 | Polycarbonate 3 | 40, 000 | 16.0 | 260 | HB |
| Example 4 | Polycarbonate 4 | 43,000 | 13.1 | 250 | B |
| Example 5 | Polycarbonate 5 | 45, 000 | 16.2 | 310 | HB |
| Example 6 | Polycarbonate 6 | 49, 000 | 13.9 | 270 | B |
| Comparative Example 1 | Polycarbonate A | 46, 000 | 10.3 | 240 | B |
| Comparative Example 2 | Polycarbonate B | 38,000 | 18.8 | 220 | 2B |
| Comparative Example 3 | Polycarbonate C | 46, 000 | 12.1 | 230 | B |
| Comparative Example 4 | Polycarbonate D | 45, 000 | 19.0 | 250 | B |
| Comparative Example 5 | Polycarbonate E | 48, 000 | 15.8 | 240 | B |

Referring to Table 1, it was confirmed that the polycarbonates of the Examples exhibited high impact strength and high hardness compared to the Comparative Examples. Specifically, it can be seen that the polycarbonate of the present invention, in which a phenyl group is substituted with a halogen group, an alkyl group or an alkoxy group, has high impact strength and pencil hardness, compared to a polycarbonate in which a phenyl group is not substituted.

In particular, the polycarbonate of Comparative Example 4 differs from the polycarbonates of Examples 1 and 2 only in the presence or absence of phenyl group substitution, and it can be confirmed that the impact strength and pencil hardness of the polycarbonate of Comparative Example 4 are lower than those of Examples 1 and 2.

Furthermore, the polycarbonate of Comparative Example 5 differs from the polycarbonate of Example 5 in the presence or absence of phenyl group substitution, and it can be seen that the polycarbonate of Comparative Example 5 has a lower impact strength and also has a lower pencil hardness, than the polycarbonate of Example 5.

Therefore, it could be confirmed that the polycarbonate including the repeating unit of Chemical Formula 1 of the present invention can achieve both improved impact resistance and high hardness.

## Claims

1. A polycarbonate comprising a unit represented by the following Chemical Formula 1: 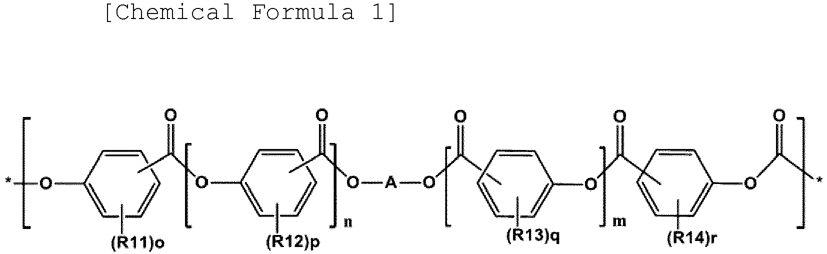 in Chemical Formula 1,
wherein A is one selected from a substituted or unsubstituted straight-chained or branched alkylene, a substituted or unsubstituted cycloalkylene, and a substituted or unsubstituted arylene or a group in which two or more thereof are linked,
R11 to R14 are the same as or different from each other, and are each a halogen, an alkyl or an alkoxy,
o, p, q and r are each an integer from 1 to 4,
n and m are each an integer from 0 to 50,
when o is 2 or greater, R11's are the same as or different from each other,
when p or n is 2 or greater, R12's are the same as or different from each other,
when q or m is 2 or greater, R13's are the same as or different from each other,
when r is 2 or greater, R14's are the same as or different from each other,
units of Chemical Formula 1 included in the polycarbonate are the same as or different from each other, and
* means a site linked to the main chain of the polycarbonate.

2. The polycarbonate of claim 1, wherein the polycarbonate comprises the unit represented by Chemical Formula 1 in an amount of 3 wt% or more, based on a total weight of the polycarbonate.

3. The polycarbonate of claim 1, wherein the polycarbonate has a weight average molecular weight of 30,000 g/mol to 60,000 g/mol.

4. The polycarbonate of claim 1, wherein A is selected from the following structural formulae: 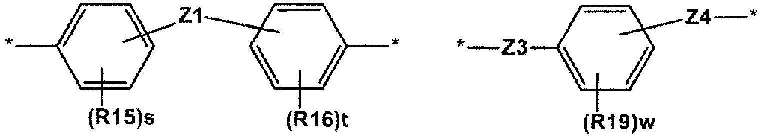 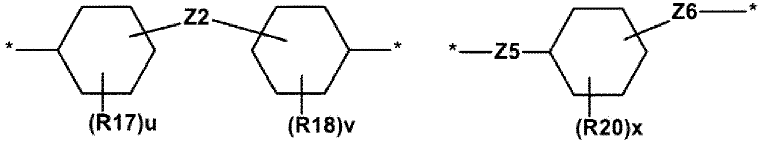 in the structural formulae,
wherein Z1 to Z6 are the same as or different from each other, and are each a single bond, a straight-chained or branched alkylene, or cycloalkylene,
R15 to R20 are the same as or different from each other, and are each hydrogen, a straight-chained or branched alkyl, cycloalkyl, or aryl,
s, t and w are each an integer from 0 to 4,
u, v and x are each an integer from 0 to 10,
when s is 2 or higher, R15's are the same as or different from each other,
when t is 2 or higher, R16's are the same as or different from each other,
when u is 2 or higher, R17's are the same as or different from each other,
when v is 2 or higher, R18's are the same as or different from each other,
when w is 2 or higher, R19's are the same as or different from each other, and
when x is 2 or higher, R20's are the same as or different from each other.

5. The polycarbonate of claim 1, wherein Chemical Formula 1 is represented by the following Chemical Formula 1-A or 1-B: 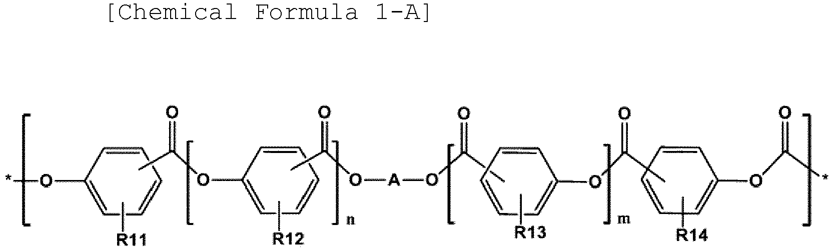 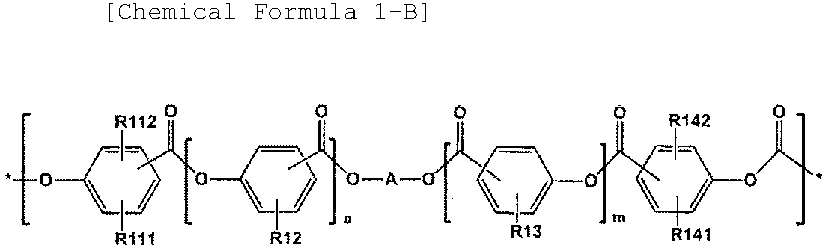 in Chemical Formulae 1-A and 1-B,
R111, R112, R141 and R142 are the same as or different from each other, and are each a halogen, alkyl or alkoxy, A is one selected from a substituted or unsubstituted straight-chained or branched alkylene, a substituted or unsubstituted cycloalkylene, and a substituted or unsubstituted arylene or a group in which two or more thereof are linked,
R11 to R14 are the same as or different from each other, and are each a halogen, an alkyl or an alkoxy,
o, p, q and r are each an integer from 1 to 4, and
n and m are each an integer from 0 to 50.

6. The polycarbonate of claim 1, wherein the polycarbonate further comprises a unit of the following Chemical Formula 2: 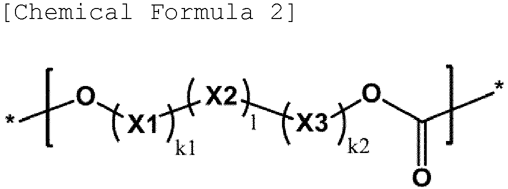 in Chemical Formula 2,
wherein X1 and X3 are the same as or different from each other, and are each a substituted or unsubstituted divalent aliphatic hydrocarbon group, a substituted or unsubstituted divalent isosorbide group, a substituted or unsubstituted arylene, or a substituted or unsubstituted heteroarylene,
X2 is a substituted or unsubstituted divalent aliphatic hydrocarbon group, a substituted or unsubstituted divalent isosorbide group, a substituted or unsubstituted arylene, a substituted or unsubstituted heteroarylene, O, S, SO, SO₂ or CO,
k1 is 0 or 1, provided that when X2 directly bonded to X1 is O, S, SO, SO₂ or CO, k1 is 1,
l is an integer from 1 to 5, and when l is 2 or higher, X2's are the same as or different from each other,
k2 is 0 or 1, provided that when X2 directly bonded to X3 is O, S, SO, SO₂ or CO, k2 is 1,
units of Chemical Formula 2 included in the polycarbonate are the same as or different from each other, and
* means a site linked to the main chain of the polycarbonate.

7. The polycarbonate of claim 6, wherein Chemical Formula 2 is represented by one of the following Chemical Formulae 3 to 6: 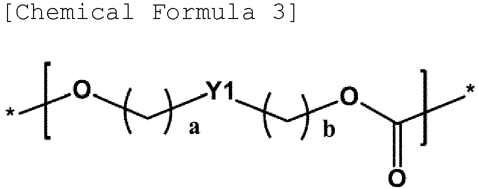 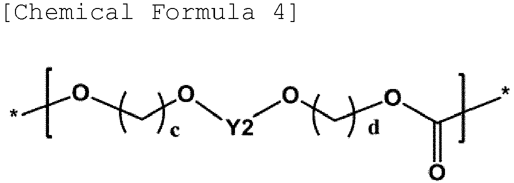 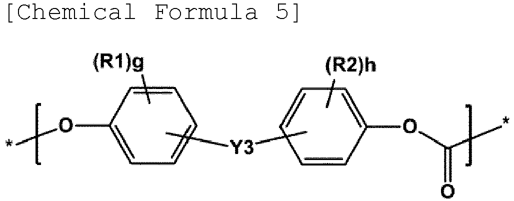 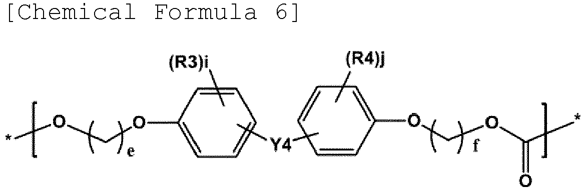 in Chemical Formulae 3 to 6,
Y1 and Y2 are each a substituted or unsubstituted divalent aliphatic hydrocarbon group, a substituted or unsubstituted divalent isosorbide group, a substituted or unsubstituted arylene, or a substituted or unsubstituted heteroarylene,
Y3 and Y4 are each a substituted or unsubstituted straight-chained or branched alkylene, a substituted or unsubstituted cycloalkylene, O, S, SO, SO₂ or CO,
R1 to R4 are the same as or different from each other, and are each hydrogen, a halogen, a substituted or unsubstituted alkyl, or a substituted or unsubstituted alkoxy,
a and b are each an integer from 0 to 10,
c, d, e and f are each an integer from 1 to 10,
g, h, i and j are each an integer from 0 to 4,
when g, h, i and j are each 2 or higher, substituents in the parenthesis are the same as or different from each other,
the units of Chemical Formulae 3 to 6 included in the polycarbonate are the same as or different from each other, and
* means a site linked to the main chain of the polycarbonate.

8. A method for preparing the polycarbonate according to claim 1, the method comprising:
polymerizing a composition comprising a compound of the following Chemical Formula 11 and a carbonate precursor: 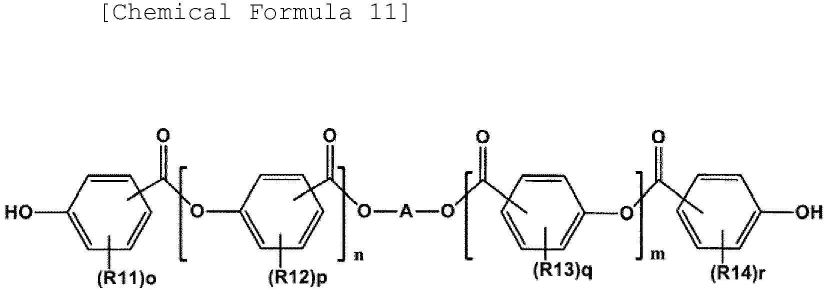
in Chemical Formula 11, the definition of each substituent is the same as that in Chemical Formula 1.

9. The method of claim 8, wherein the carbonate precursor is represented by the following Chemical Formula 12: 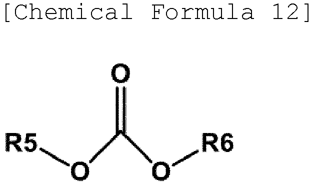 in Chemical Formula 12,
R5 and R6 are the same as or different from each other, and are each a substituted or unsubstituted straight-chained or branched alkyl, a substituted or unsubstituted cycloalkyl, a substituted or unsubstituted aryl, or a substituted or unsubstituted heteroaryl.

10. The method of claim 8, wherein the composition further comprises a compound of the following Chemical Formula 21: 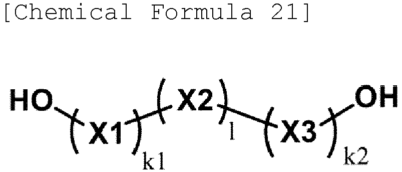 in Chemical Formula 21,
X1 and X3 are the same as or different from each other, and are each a substituted or unsubstituted divalent aliphatic hydrocarbon group, a substituted or unsubstituted divalent isosorbide group, a substituted or unsubstituted arylene, or a substituted or unsubstituted heteroarylene,
X2 is a substituted or unsubstituted divalent aliphatic hydrocarbon group, a substituted or unsubstituted divalent isosorbide group, a substituted or unsubstituted arylene, a substituted or unsubstituted heteroarylene, O, S, SO, SO₂ or CO,
k1 is 0 or 1, provided that when X2 directly bonded to X1 is O, S, SO, SO₂ or CO, k1 is 1,
l is an integer from 1 to 5, and when l is 2 or higher, X2's are the same as or different from each other, and
k2 is 0 or 1, provided that when X2 directly bonded to X3 is O, S, SO, SO₂ or CO, k2 is 1.

11. The method of claim 10, wherein Chemical Formula 21 is represented by the following Chemical Formulae 31, 41, 51 or 61: 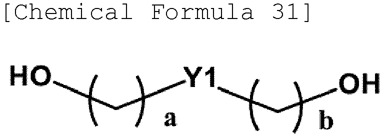 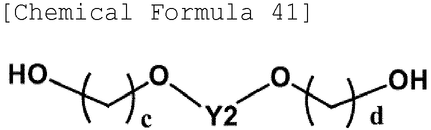 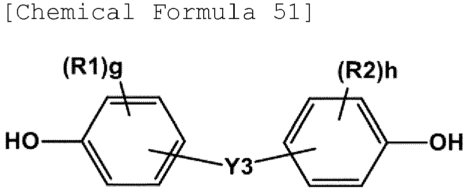 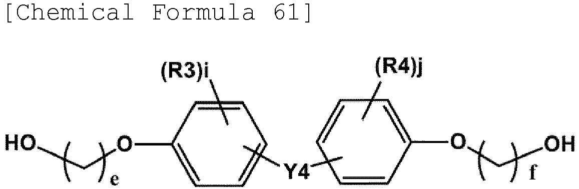 in Chemical Formulae 31, 41, 51 and 61,
wherein Y1 and Y2 are each a substituted or unsubstituted divalent aliphatic hydrocarbon group, a substituted or unsubstituted divalent isosorbide group, a substituted or unsubstituted arylene, or a substituted or unsubstituted heteroarylene,
Y3 and Y4 are each a substituted or unsubstituted straight-chained or branched alkylene, a substituted or unsubstituted cycloalkylene, O, S, SO, SO₂ or CO,
R1 to R4 are the same as or different from each other, and are each hydrogen, a halogen, a substituted or unsubstituted alkyl, or a substituted or unsubstituted alkoxy,
a and b are each an integer from 0 to 10,
c, d, e and f are each an integer from 1 to 10,
g, h, i and j are each an integer from 0 to 4, and
when g, h, i and j are each 2 or higher, substituents in the parenthesis are the same as or different from each other.

12. A composition comprising the polycarbonate according to any one of claims 1 to 7.

13. A molded article prepared from a composition comprising the polycarbonate according to any one of claims 1 to 7.
